# DEMANDE DE BREVET EUROPEEN

(11) **EP 0 727 333 A1**
(43) Date de publication de la demande: **21.08.1996**
(21) Numéro de dépôt: 96490010.4
(22) Date de dépôt: 13.02.1996
(51) Int. Cl.: B60N 2/44

(54) **Housse pour siège notamment de véhicule industriel**

(30) Priorité: 14.02.1995 FR 9501894
(71) Demandeur: HOLDING SWEETCO, Société Anonyme, 59115 Leers (FR)
(72) Inventeur: Sobocki, Jean G., F-59283 Raimbeaucourt (FR)
(74) Mandataire: Duthoit, Michel

(57) **Abrégé**

La présente invention concerne une housse (1) pour siège (2), notamment siège de véhicule industriel, constituée d'une enveloppe (10) pour le dossier (4) et/ou l'assise (3) dudit siège (2).

Selon l'invention, l'enveloppe (10) présente sur au moins une de ses faces latérales au moins une ouverture (16) allongée, apte à laisser déboucher en saillie au moins un élément auxiliaire (7) de confort et/ou de sécurité du siège (2) et munie de moyens d'obturation (17), réglables, aptes à enserrer le ou lesdits éléments auxiliaires (7) indépendamment de leur niveau.

## Description

La présente invention concerne une housse pour siège telle que, notamment, siège de véhicule industriel.

Plus généralement, elle trouvera son application dans tous les domaines de l'activité économique dans lesquels on souhaite revêtir un siège. Ainsi, la housse objet de l'invention pourra être utilisée également, par exemple, dans des véhicules utilitaires, des camping-cars ou autres.

Actuellement, on connaît différents types de housses pour sièges de véhicule automobile. Celles-ci présentent l'inconvénient de ne pas être applicables aux sièges de certains véhicules tels que, notamment, les véhicules industriels. En effet, ces sièges, contrairement à ceux rencontrés dans les véhicules automobiles, sont solidaires de différents accessoires, tels que des enrouleurs de ceinture, des accoudoirs ou autres, qui doivent rester accessibles ou pouvoir déboucher à travers la housse.

Le but de l'invention est de pallier les inconvénients précités en proposant une housse pour siège, notamment siège de véhicule industriel, qui permettent aux différents accessoires dudit siège de déboucher et/ou d'être accessible à travers la housse.

Un autre but de la présente invention est de proposer une housse qui puisse être réalisée en un modèle unique, adaptable à tout type de siège quel que soit le positionnement des accessoires qu'il présente.

Un avantage de la présente invention est de restreindre le nombre de housses différentes à produire et de diminuer ainsi, notamment, les stocks à constituer, la housse étant adaptable quel que soit le modèle de siège qu'elle doit envelopper.

D'autres buts et avantages de la présente invention apparaîtront au cours de la description qui va suivre qui n'est donnée qu'à titre indicatif et qui n'a pas pour but de la limiter.

La présente invention concerne une housse pour siège, notamment siège de véhicule industriel, constituée d'une enveloppe pour le dossier et/ou l'assise dudit siège, caractérisée par le fait que ladite enveloppe présente, sur au moins l'une de ses faces latérales, au moins une ouverture allongée, apte à laisser déboucher en saillie au moins un élément auxiliaire de confort et/ou de sécurité du siège et munie de moyens d'obturation, réglables, aptes à enserrer le ou lesdits éléments auxiliaires indépendamment de leur niveau.

La présente invention sera mieux comprise à la lecture de la description qui va suivre accompagnée des dessins en annexe qui en font partie intégrante.

La figure 1 montre, en vue de face, un exemple de réalisation de housse conforme à l'invention enveloppant un exemple particulier de siège sur lequel elle peut être disposée.

La figure 2 montre, en vue de gauche, la housse représentée à la figure 1.

La figure 3 montre, en vue de droite, la housse représentée à la figure 1.

La figure 4 détaille un mode particulier de réalisation d'une face latérale de l'enveloppe pour l'assise d'un exemple de housse conforme à l'invention.

La figure 5 détaille, en vue de coupe, un exemple particulier de housse conforme à l'invention.

La figure 6 détaille, en vue de face, une partie d'une face latérale de l'enveloppe pour l'assise d'un exemple de housse conforme à l'invention.

La figure 7 est une vue de coupe d'après la ligne VII-VII représentée à la figure 6 précédente.

La figure 8 est une vue de dessous d'un exemple de housse conforme à l'invention.

La présente invention concerne une housse pour siège, notamment siège de véhicule industriel. Plus largement, elle trouvera ses applications dans tous les domaines de l'activité économique dans lesquels on souhaite envelopper un siège. Ainsi, la présente invention pourra être également utilisée dans, par exemple, des véhicules utilitaires, des camping-cars ou autres.

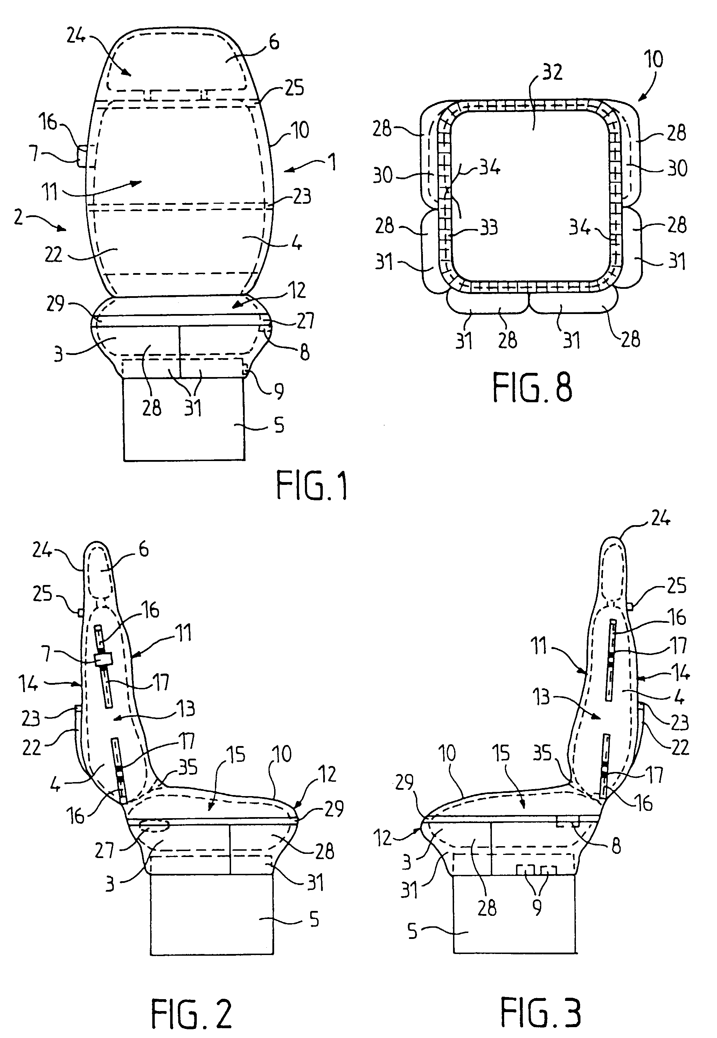

A la figure 1, on observe un mode particulier de réalisation de housse 1, conforme à l'invention, pour siège 2. Ce dernier comprend, par exemple, une assise 3, un dossier 4, un socle 5 et/ou un appui-tête 6.

Le siège 2 comprend également, par exemple, des éléments de confort et/ou de sécurité positionnés de différentes façons selon les modèles rencontrés. Il s'agit, notamment, d'un enrouleur de ceinture de sécurité 7, d'une attache de ceinture de sécurité 8 et/ou différents boutons et manettes 9 de commande, par exemple, de l'inclinaison du siège, de sa position par rapport à la planche de bord, de sa hauteur ou autre.

Il peut s'agir encore, par exemple, d'accoudoirs. Ces derniers, dans un souci de simplification, n'ont pas été reportés sur les dessins.

La housse 1 est constituée d'une enveloppe 10 pour le dossier 4 et/ou l'assise 3 du siège 2. L'enveloppe pour le dossier 4 présente, par exemple, une face frontale 11 et l'enveloppe pour l'assise 3 une face frontale 12.

Comme représentée aux figures 2 et 3, l'enveloppe pour le dossier 4 présente également, notamment, des faces latérale 13 et dorsale 14 et l'enveloppe pour l'assise des faces latérales 15.

Selon l'invention, l'enveloppe 10 présente, sur au moins une de ses faces latérales 13, 15, au moins une ouverture 16 allongée. Celle-ci est apte à laisser déboucher en saillie au moins un élément auxiliaire de confort et/ou de sécurité du siège 2.

De plus, elle est munie de moyens d'obturation 17, réglables, aptes à enserrer le ou lesdits éléments auxiliaires indépendamment de leur niveau.

Selon l'exemple particulier représenté, l'élément auxiliaire débouchant du siège 2 est constitué par l'enrouleur de ceinture de sécurité 7. Grâce aux moyens d'obturation 17, la housse 1 conforme à l'invention épouse les contours dudit enrouleur 7 et permet d'obtenir un habillage du siège 2 complet et esthétique. De plus, lesdits moyens d'obturation 17 étant réglables, il n'est pas nécessaire de développer plusieurs housses pour chaque type de siège 2 en fonction de la hauteur de l'enrouleur 7.

On peut également remarquer que les moyens d'obturation 17 permettent, par exemple, une meilleure application de la housse 1 sur le siège 2 en favorisant, en position fermée, sa tension.

Selon un mode particulier de réalisation de l'invention, l'ouverture allongée 16 est orientée sensiblement parallèlement à la direction de l'enveloppe 10, c'est-à-dire sensiblement parallèlement au grand côté d'une de ses faces latérales 13, 15.

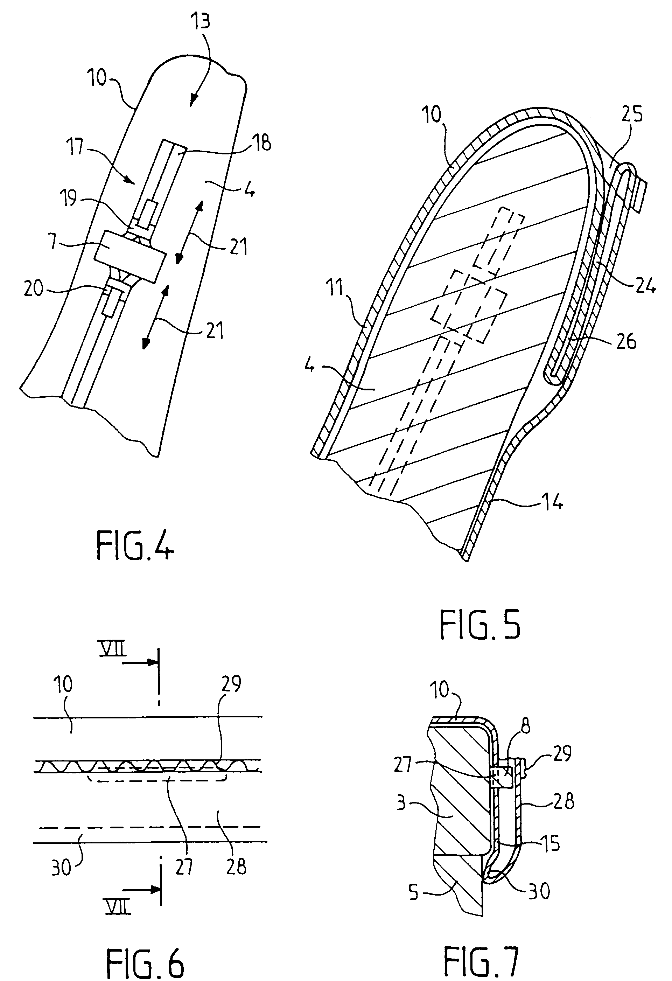

Comme détaillés à la figure 4, où le siège 2 est représenté sans appui-tête 6, les moyens d'obturation 17 sont constitués, par exemple, par une fermeture à glissière 18 comprenant au moins deux curseurs 19, 20, montés tête-bêche.

Ainsi, par exemple, à l'installation de la housse 1 sur le siège 2, les curseurs 19, 20 sont placés aux deux extrémités de la fermeture à glissière 18. Après avoir fait déboucher l'enrouleur 7 à travers l'ouverture 16, on la referme alors autour dudit enrouleur 7, quel que soit le niveau de ce dernier, en déplaçant, suivant les flèches repérées 21, les deux curseurs 19, 20.

Suivant un autre mode de réalisation non représenté, les moyens d'obturation 17 sont constitués par des bandes velours crochet et/ou par des pressions, boutons, agrafes ou équivalents.

Si l'on se reporte de nouveau aux figures 2 et 3, on constate que la housse 1 comprend, par exemple, deux ouvertures 16 sur chacun des côtés latéraux 13 de l'enveloppe pour le dossier 4. Elles sont situées, notamment, dans le prolongement l'une de l'autre, la première étant placée sensiblement à l'extrémité supérieure de l'enveloppe pour le dossier 4 et l'autre sensiblement à sa base.

Ceci permet d'utiliser ladite housse 1 avec des sièges 2 munis d'accoudoirs et/ou de s'affranchir des différences de positionnement de l'enrouleur 7 sur le siège 2. Ainsi, la housse 1 est universelle et peut s'adapter sur tout type de siège 2. Selon ce mode de réalisation, les ouvertures 16 sont chacune munie, par exemple, de moyens d'obturation 17.

Comme représentée, la housse 1 comprend éventuellement, une poche dorsale 22. Cette dernière est munie d'un rebord élastiqué 23 qui participe à l'application de la housse 1 sur le siège 2 en favorisant sa tension.

Selon un mode particulier de réalisation de l'invention, l'enveloppe pour le dossier 4 est prolongé par une enveloppe supérieure 24 apte à constituer une housse pour l'appui-tête 6 du siège 2. Il est à noter que ce mode de réalisation est complémentaire et facultatif. Ladite housse 24 est délimitée par une bande élastique 25,

Comme détaillée à la figure 5, l'enveloppe supérieure 24 est, par exemple, apte à être escamotée dans l'enveloppe pour le dossier 4, au niveau de la bande élastique 25, de manière à former une poche 26 au niveau dudit dossier 4 en cas d'absence de l'appui-tête 6.

Si l'on se reporte de nouveau aux figures 2 et 3, on constate que l'enveloppe pour l'assise 3 présente, par exemple, au moins sur au moins une de ses faces latérales 15 au moins une fente 27, bordée, apte à laisser déboucher en saillie au moins des éléments auxiliaires de confort et/ou de sécurité du siège 2. Selon l'exemple représenté, il s'agit de l'attache 8 pour la ceinture de sécurité.

Selon un exemple de réalisation, la fente 27 constitue une ouverture 16 munie de moyens d'obturation 17 tel que, par exemple, une fermeture à glissière avec double curseur monté tête-bêche, non représentée.

Afin de s'affranchir des différents positionnements possibles, par exemple, de ladite attache 8, l'enveloppe pour l'assise 3 présente une fente bordée 27 sur chacune de ses faces latérales, sensiblement à l'arrière desdites faces sous l'enveloppe pour le dossier 4.

Comme détaillé à la figure 6, afin de recouvrir, de manière esthétique, la fente 27, la housse 1 comprend, par exemple, au moins partiellement autour de l'enveloppe pour l'assise 3 une jupe 28, apte à dissimuler ladite fente 27.

A la figure 7, qui illustre, au niveau de l'assise 3, la coopération des exemples particuliers de housse 1 et de siège 2 décrits, on remarque que la jupe 28 permet également de cacher, au moins partiellement, l'attache 8.

La jupe 28 comprend, notamment, un bord élastiqué supérieur 29. Elle est assujettie localement à la housse 1, au niveau de l'enveloppe pour l'assise 3, par exemple, par l'intermédiaire de coutures orientées sensiblement verticalement.

Comme détaillée à la figure 8, la housse 1 comprend, notamment, au moins un interstice 30 entre la jupe 28 et l'enveloppe pour l'assise 3, apte à laisser accès, à travers ladite housse 1 sous ladite assise 3. Ceci permet, notamment, d'atteindre, par exemple, les éléments auxiliaires placés sous l'assise 3 comme les boutons et/ou manettes 9.

Comme précédemment, pour s'affranchir des différents positionnements de ces éléments d'un siège 2 à l'autre, la housse 1 comprend un interstice 30 de chaque côté de l'assise 3. Ils sont prévus, par exemple, à l'arrière de ladite enveloppe pour l'assise 3.

Aux endroits où la housse 1 ne présente pas d'interstice 30, la jupe 28 et l'enveloppe pour l'assise 3 sont assujetties l'une à l'autre le long de leur bord inférieur, par exemple, par couture, et forment ainsi des poches 31. Selon l'exemple représenté, la housse 1 comprend quatre poches 31. Ce nombre n'est donné qu'à titre d'exemple, la housse 1 pouvant être munie d'une seule poche 31 ou de plusieurs.

Toujours selon la figure 8, la housse 1 présente un orifice 32 par lequel elle est introduite sur le siège 2. Afin d'assurer un maintien efficace de la housse 1 sur le siège 2, ledit orifice 32 est entouré, notamment, d'une bande élastiquée de fermeture 33 munie d'une cordelette de réglage 34.

En se reportant de nouveau aux figures 2 et 3, on constate que la housse 1 comprend, en outre, par exemple, un repli 35 interne, au niveau de l'interface enveloppe pour le dossier 4-enveloppe pour l'assise 3, apte à être inséré entre ledit dossier 4 et ladite assise 3. Ceci permet de renforcer le maintien de la housse 1 sur le siège 2. Pour cela, le repli interne est prévu, notamment, sur toute la largeur dudit siège 2.

Naturellement, d'autres mises en oeuvre de la présente invention, à la portée de l'homme de l'art, auraient pu être envisagées sans pour autant sortir du cadre de la présente demande.

## Revendications

1. Housse (1) pour siège (2), notamment siège de véhicule industriel, constituée d'une enveloppe (10) pour le dossier (4) et/ou l'assise (3) dudit siège (2), caractérisée par le fait que ladite enveloppe (10) présente, sur au moins une de ses faces latérales (13, 15) au moins une ouverture (16), allongée, apte à laisser déboucher en saillie au moins un élément auxiliaire de confort et/ou de sécurité du siège (2) et munie de moyens d'obturation (17), réglables, aptes à enserrer le ou lesdits éléments auxiliaires indépendamment de leur niveau.

2. Housse selon la revendication 1, caractérisée par le fait que l'ouverture allongée (16) est orientée sensiblement parallèlement à la direction de l'enveloppe (10).

3. Housse selon la revendication 1, caractérisée par le fait que les moyens d'obturation (17) sont constitués par une fermeture à glissière (18) comprenant au moins deux curseurs (19, 20) montés tête bêche.

4. Housse selon la revendication 1, caractérisée par le fait que les moyens d'obturation (17) sont constitués par des bandes velours crochet et/ou par des pressions, boutons, agrafes ou équivalents.

5. Housse selon la revendication 1, caractérisée par le fait qu'elle comprend deux ouvertures (16) sur chacun des côtés latéraux (13) de l'enveloppe pour le dossier (4).

6. Housse selon la revendication 1, caractérisée par le fait que l'enveloppe pour le dossier (4) est prolongée par une enveloppe supérieure (24), délimitée par une bande élastique (25), apte à constituer une housse d'un appui-tête (6) du siège (2) et à être escamotée dans ladite enveloppe pour le dossier (4), au niveau de ladite bande élastique (25), de manière à former une poche (26) au niveau dudit dossier (4) en cas d'absence d'appui-tête (6).

7. Housse selon la revendication 1, caractérisée par le fait que l'enveloppe pour l'assise (3) présente au moins sur au moins une de ses faces latérales (15) au moins une fente (27), bordée, apte à laisser déboucher en saillie au moins des éléments auxiliaires de confort et/ou de sécurité du siège (2).

8. Housse selon la revendication 7, caractérisée par le fait qu'elle comprend, au moins partiellement, autour de l'enveloppe pour l'assise (3), une jupe (28) apte à dissimuler ladite fente (27).

9. Housse selon la revendication 8, caractérisée par le fait qu'elle comprend, au moins un interstice (20) entre la jupe (28) et l'enveloppe pour l'assise (3), apte à laisser accès, à travers ladite housse (1), sous ladite assise (3).

10. Housse selon la revendication 1, caractérisée par le fait qu'elle comprend un repli (35) interne au niveau de l'interface enveloppe pour le dossier (4)-enveloppe pour l'assise (3), apte à être inséré entre ledit dossier (4) et ladite assise (3).
